# EUROPÄISCHE PATENTSCHRIFT

(11) **EP 0 268 184 B1**
(45) Veröffentlichungstag und Bekanntmachung des Hinweises auf die Patenterteilung: **04.08.1993**
(21) Anmeldenummer: 87116539.5
(22) Anmeldetag: 09.11.1987
(51) Int. Cl.: C12C 9/04, C12C 13/04

(54) **Whirlpool für die Heisstrubabscheidung beim Brauen von Bier**
Whirlpool for the separation of hot sludge in brewing
"Whirlpool" pour la séparation de trub à chaud en brasserie

(30) Priorität: 20.11.1986 DE 8631029 U
(43) Veröffentlichungstag der Anmeldung: 25.05.1988
(73) Patentinhaber: Anton Steinecker Maschinenfabrik GmbH, D-85318 Freising (DE)
(72) Erfinder: Tretter, Hans, D-8050 Freising (DE)
(74) Vertreter: Grünecker, Kinkeldey, Stockmair & Schwanhäusser Anwaltssozietät

(56) Entgegenhaltungen:
- DE-C- 538 627
- DE-C- 3 132 205
- DE-C- 3 442 516
- DE-C- 3 504 500
- GB-A- 780 547

## Beschreibung

Die Neuerung betrifft einen Whirlpool für die Heißtrubabscheidung aus der Würze beim Brauen von Bier, der als kreisrunden Behälter mit einem Boden ausgebildet ist, auf dem sich der Trub ablagert und mit einer Heizeinrichtung zum Aufheizen der Würze. Whirlpools dieser Art sind vom Stand der Technik bekannt, beispielsweise aus der DE-PS 31 32 205. Sie dienen dazu, die sich in der Würze nach dem Aufheizen bildenden starken Eiweißausflockungen (Trub) von der Würze auf einer hydrodynamischen Basis zu trennen. Dies geschieht dadurch, daß man die Würze tangential in den als kreisrunden Behälter ausgebildeten Whirlpool einströmen läßt. Durch die Umströmung der Würze in dem Behälter scheidet sich der Trub aus der Würzeflüssigkeit ab und setzt sich kegelförmig auf dem Behälterboden ab.

Die Würze wird dabei bevor sie in dem Whirlpool zum Umströmen veranlaßt wird, aufgeheizt. Hierzu hat man sich im Stand der Technik im allgemeinen bekannter Außenkocher bedient, durch die die Würze vor dem Einleiten in den Whirlpool geleitet und dabei mit Heißdampf aufgeheizt wird.

Dieser Außenkocher stellt ein zusätzliches Aggregat dar, für welches eine besondere Isolierung erforderlich ist. Darüber hinaus wird eine eigene Pumpe benötigt, um die Würze durch den Kocher zu fördern.

Es ist auch bereits bekannt, an der Zarge oder im Bereich des Bodens einer Whirlpoolpfanne eine Heizeinrichtung vorzusehen, um dadurch die Würze aufzuheizen. Diese Einrichtungen müssen aber ebenfalls gesondert isoliert werden, was ebenfalls einen erhöhten Material- und Teileaufwand mit sich bringt.

Der Neuerung liegt die Aufgabe zugrunde, einen Whirlpool der eingangs genannten Art anzugeben, bei dem die Würze platzsparend und ohne besonderen Aufwand zur Isolierung bei der Aufheizung der Würze behandelt werden kann.

Zur Lösung dieser Aufgabe sieht die Neuerung vor, daß als Heizeinrichtung ein rotationssymmetrischer Innenkocher vorgesehen ist, der konzentrisch zur Längsmittelachse des Behälters im Behälterinnenraum mit seiner Unterseite beabstandet zum Boden des Behälters angeordnet ist.

Mit diesen Merkmalen schlägt die Neuerung vor, im Innenraum des Whirlpools einen Innenkocher anzuordnen, der konzentrisch zur Längsmittelachse des Behälters liegt. Der Innenkocher ist rotationssymmetrisch. Durch die rotationssymmetrische und konzentrisch zur Längsmittelachse verlaufende Anordnung des Innenkochers wird sichergestellt, daß die Rotationsbewegung der Würze beim Umlauf im Whirlpool nicht beeinträchtigt wird. Der Innenkocher stört also die Umlaufströmung der Würze nicht, so daß auch der Abscheidevorgang durch den Innenkocher nicht beeinträchtigt wird. Die beabstandete Anordnung des Innenkochers derart, daß seine Unterkante über dem Boden des Behälters liegt, stellt sicher, daß sich der Trubkegel, der sich beim Umlaufen der Würze auf dem Boden mit seiner Kegelspitze im Bereich der Längsmittelachse liegend ausbilden kann. Die Trubabscheidung wird also durch diese Anordnung des Innenkochers ebenfalls nicht beeinträchtigt. Der Innenkocher bedarf keiner besonderen Isolierung, weil er in dem Whirlpool selbst angeordnet ist, und damit von der heißen Würze umspült wird. Darüber hinaus entfallen gesonderte Pumpen und damit auch der Energiebedarf für solche Pumpen zum Durchfördern der Würze, wie das bei externen Kochern der Fall ist. Schließlich ist die Heizeinrichtung des Whirlpools platzsparend im Inneren des Behälters untergebracht, so daß auch der Platzbedarf des neuerungsgemäßen Whirlpools geringer ist als bei bekannten Einrichtungen.

In einer Ausgestaltung der Erfindung ist vorgesehen, daß der Innenkocher ein Röhreninnenkocher ist. Solcher Innenkocher läßt sich einfach reinigen. Bei einer anderen Ausgestaltung der Neuerung ist vorgesehen, daß der Innenkocher ein Kaskadenkocher ist. Auch mit Kaskadenkocher läßt sich die erwünschte Aufheizung der Würze erzielen.

In weiterer Ausgestaltung der Neuerung ist vorgesehen, daß in den Innenkocher ein konzentrisch zur Längsmittelachse des Behälters vom Boden her sich erstreckendes Dampfzuleitungsrohr mündet. Die konzentrische Anordnung des Dampfzuleitungsrohres stellt ebenfalls sicher, daß weder der Umlauf der Würze noch die Bildung des Trubkegels negativ beeinflußt wird. Über das Dampfzuleitungsrohr kann der Heißdampf zum Aufheizen der Würze vom Boden her eingeleitet werden.

Schließlich sieht die Neuerung vor, daß der Innenkocher an seinem dem Boden abgewandten Ende eine Düse und beabstandet zur Düse einen Umlenkschirm aufweist. Die Würze wird dabei in dem Innenkocher aufgeheizt und über die Düse gegen den Umlenkschirm nach oben gestrahlt. Der Umlenkschirm lenkt die Würze im wesentlichen um 90° um und vereinigt sie somit mit der bereits umströmenden Würzeflüssigkeit.

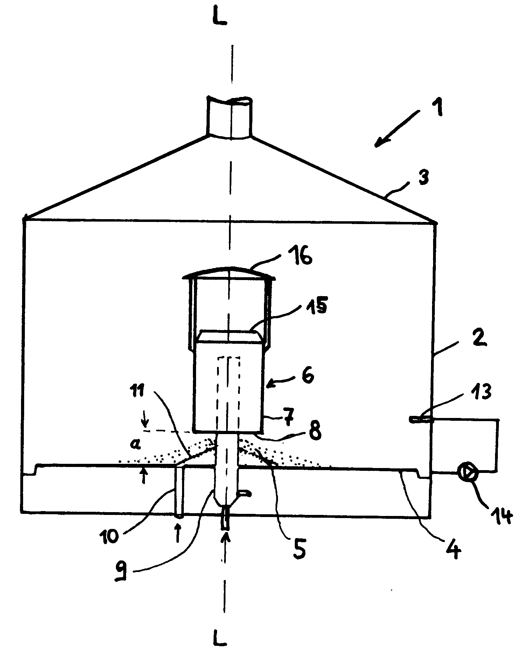

Die Neuerung wird im folgenden anhand des in der Zeichnung dargestellten Ausführungsbeispiels beschrieben.

Die einzige Figur zeigt eine schematische Längsschnittdarstellung durch einen neuerungsgemäßen Whirlpool.

In der Figur ist der Whirlpool insgesamt mit '1' bezeichnet. Der Whirlpool 1 ist ein in Draufsicht kreisrunder Behälter mit einer kreiszylindrischen Behälterseitenwand 2. Der Behälter ist nach oben durch den Deckel 3 abgeschlossen. Im Innenraum ist im unteren Ende des Behälters 1 ein Boden 4 befestigt, auf dem sich der aus der im Behälter kreisförmig umlaufenden Würze abscheidende Trub 5 kegelförmig ablagert. Der Behälter 1 ist rotationssymmetrisch zur Längsmittelachse L-L. Im Innenraum des Behälters 1 ist als Heizeinrichtung der rotationssymmetrische Innenkocher 6 angeordnet. Der Innenkocher 6 hat ebenfalls eine kreiszylindrische Außenwandung 7. Die Unterkante 8 des Innenkochers 6 liegt in einem Abstand a über dem Boden 4. In den Innenkocher 6 mündet von Boden 4 her ein Dampfzuleitungsrohr 9. Das Dampfzuleitungsrohr ist ebenfalls konzentrisch zur Längsmittelachse L-L des Behälters 1 angeordnet.

Ebenfalls konzentrisch zur Längsmittelachse L-L sind im Bereich des Bodens 4 Düsen in Form von perforierten Leitblechen 11 angeordnet, in die ein Kanal 10 mündet. Durch den Kanal 10 kann Wasser eingespült werden, welches dann durch die Düsen 11 austritt und den Trub 5 radial nach außen in die Rinnen 12 spült. Von dort wird der Trub dann in bekannter Weise ausgefördert. An der Behälterseitenwand 2 ist des weiteren ein tangentialer Einlaß 13 ausgebildet. Über eine Pumpe 14 kann die Würze im unteren Bereich entnommen werden und dann tangential wieder entlang der Behälterseitenwand über den Einlaß 13 eingeströmt werden, so daß die Würze in stetem kreisförmigem Umlauf innerhalb des Behälters bleibt.

Zur Oberseite des Behälters 1 hin endet der Innenkocher 6 in einer Düse 15. Die im Innenkocher 6 mittels des Heißdampfes, der durch das Dampfzuleitungsrohr 9 eingeströmt wird, erwärmte Würze wird über die Düse 15 gegen den Umlenkschirm 16 gerichtet und radial nach außen umgelenkt. Sie fließt dann wieder mit dem kreisförmig umlaufenden Würzestrom zusammen.

Der Innenkocher 6 kann in einer konkreten Ausführungsform sowohl ein Röhreninnenkocher als auch ein Kaskadenkocher sein. In beiden Fällen wird aufgrund der konzentrischen Anordnung und rotationssymmetrischen Außenfläche des Innenkochers erreicht, daß die Strömungsbewegung der im Behälter 1 umlaufenden Würze nicht negativ beeinträchtigt wird. Da darüber hinaus die Unterkante 8 des Innenkochers 6 beabstandet (Abstand a) zum Boden 4 angeordnet ist, kann sich der Trubkegel wie bekannt rotationssymmetrisch zur Längsmittelachse L-L ausbilden. Die Höhe a wird dabei so gewählt, daß übliche Trubkegelhöhen möglich sind. Der Innenkocher 6 bedarf einer besonderen Isolierung seiner Außenwand, da er von der heißen Würze umströmt wird. Auch die Verluste im Dampfzuleitungsrohr sind gering, weil das Rohr im Inneren des von der heißen Würze durchströmten Behälters verläuft.

## Patentansprüche

1. Whirlpool für die Heißtrubabscheidung aus der Würze beim Brauen von Bier, der als kreisrunder Behälter mit einem Boden ausgebildet ist, auf dem sich der Trub ablagert und mit einer Heizeinrichtung zum Aufheizen der Würze, dadurch **gekennzeichnet,** daß als Heizeinrichtung ein rotationssymmetrischer Innenkocher (6) vorgesehen ist, der konzentrisch zur Längsmittelachse (L-L) des Behälters (1) im Behälterinnenraum mit seiner Unterseite (8) beabstandet zum Boden (4) des Behälters (1) angeordnet ist.

2. Whirlpool nach Anspruch 1, dadurch **gekennzeichnet,** daß der Innenkocher (6) ein Röhreninnenkocher ist.

3. Whirlpool nach Anspruch 1, dadurch **gekennzeichnet,** daß der Innenkocher (6) ein Kaskadenkocher ist.

4. Whirlpool nach wenigstens einem der vorangegangenen Ansprüche, dadurch **gekennzeichnet,** daß in den Innenkocher (6) ein konzentrisch zur Längsmittelachse (L-L) des Behälters (1) vom Boden her (4) sich erstreckendes Dampfzuleitungsrohr (9) mündet.

5. Whirlpool nach wenigstens einem der vorangegangenen Ansprüche, dadurch **gekennzeichnet,** daß der Innenkocher (6) an seinem dem Boden abgewandten Ende eine Düse (15) und beabstandet zur Düse einen Umlenkschirm (16) aufweist.

## Claims

1. Whirlpool for separating hot cooler sludge from the wort in the brewing of beer, which whirlpool is configured as a circular container having a base on which the cooler sludge is deposited, and having a heating device for heating up the wort, characterized in that there is provided, as the heating device, a rotationally symmetrical internal boiler (6), which is disposed concentrically to the longitudinal centre axis (L-L) of the container (1) in the container interior, its underside (8) being spaced apart from the base (4) of the container (1).

2. Whirlpool according to Claim 1, characterized in that the internal boiler (6) is a tubular internal boiler.

3. Whirlpool according to Claim 1, characterized in that the internal boiler (6) is a cascade boiler.

4. Whirlpool according to at least one of the preceding claims, characterized in that a steam supply pipe (9) extending from the base (4) concentrically to the longitudinal centre axis (L-L) of the container (1) opens out into the internal boiler (6).

5. Whirlpool according to at least one of the preceding claims, characterized in that the internal boiler (6) exhibits, at its end facing away from the base, a nozzle (15) and, spaced apart from the nozzle, a deflecting shield (16).

## Revendications

1. "Whirlpool" pour séparer à chaud le dépôt de bac du moût lors de la fabrication de bière, qui est conformé en réservoir de forme circulaire avec un fond sur lequel se dépose le dépôt de bac et avec un dispositif de chauffage pour chauffer le moût, **caractérisé en ce** qu'il comprend comme système de chauffage une chaudière intérieure (6) à symétrie de révolution qui est disposée concentriquement par rapport à l'axe central longitudinal (L-L) du réservoir (1), à l'intérieur dudit réservoir, sa face inférieure (8) se situant à distance du fond (4) du réservoir (1).

2. "Whirlpool" selon la revendication 1, caractérisé en ce que la chaudière intérieure (6) est une chaudière intérieure tubulaire.

3. "Whirlpool" selon la revendication 1, caractérisé en ce que la chaudière intérieure (6) est une chaudière en cascade.

4. "Whirlpool" selon l'une au moins des revendications précédentes, caractérisé en ce que dans la chaudière intérieure (6) débouche une conduite d'arrivée de vapeur (9) qui s'étend, à partir du fond (4), concentriquement par rapport à l'axe central longitudinal (L-L) du réservoir (1).

5. "Whirlpool" selon l'une au moins des revendications précédentes, caractérisé en ce que la chaudière intérieure (6) comporte à son extrémité opposée au fond, une buse (15) et, à distance de celle-ci, un écran déflecteur (16).
